# EUROPÄISCHE PATENTSCHRIFT

(11) **EP 4 571 571 B1**
(45) Veröffentlichungstag und Bekanntmachung des Hinweises auf die Patenterteilung: **04.02.2026**
(21) Anmeldenummer: 23215722.2
(22) Anmeldetag: 12.12.2023
(51) Int. Cl.: G06K 7/14

(54) **LESEN EINES OPTISCHEN CODES**
READING AN OPTICAL CODE
LECTURE D'UN CODE OPTIQUE

(43) Veröffentlichungstag der Anmeldung: 18.06.2025
(73) Patentinhaber: SICK AG, 79183 Waldkirch (DE)
(72) Erfinder: Schüler, Pascal, Teningen (DE); Zopf, Steffen, Waldkirch (DE)

(56) Entgegenhaltungen:
- EP-A1- 4 167 123
- EP-A1- 4 231 195
- EP-A1- 4 258 160
- EP-B1- 3 428 835

## Beschreibung

Die Erfindung betrifft ein Verfahren zum Lesen eines optischen Codes nach dem Oberbegriff von Anspruch 1 sowie einen optischen Codeleser.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation.

In einer wichtigen Anwendungsgruppe werden die codetragenden Objekte an dem Codeleser vorbei gefördert. Ein scannender Codeleser erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmäßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen. Auch ein scannender Codeleser erfasst die Remission und damit letztlich Bildzeilen, die zu einem Objektbild zusammengefügt werden können, auch wenn hierfür in der Praxis ein Bildsensor vorgezogen wird. In einem solchen Objektbild können Codebereiche identifiziert und ein- oder zweidimensionale Codes ausgelesen werden.

Während einer Segmentierung oder Vorsegmentierung wird als Vorbereitung für das Lesen von Codes in einem aufgenommenen Ausgangsbild eines codetragenden Objekts nach interessierenden Bereichen (ROI, region of interest) oder Codebildbereichen gesucht, also denjenigen Bereichen im Bild, die potenziell einen Code enthalten können.

In den meisten heutigen Codeleseanwendungen erfolgt die Segmentierung durch traditionelle Bildverarbeitungsalgorithmen und von Hand erstellte Klassifikatoren. Ein anderer Ansatz für die Segmentierung basiert auf künstlichen neuronalen Netzen, insbesondere tiefen Faltungsnetzen (Deep Neural Network, Convolutional Neural Network CNN).

Für einen Codeleser oder einen Lesetunnel stellt eine hohe Leserate eines der wichtigsten Qualitätskriterien dar. Lesefehler zwingen zu aufwändigen Fehlerbehebungen, wie dem erneuten manuellen Abscannen oder einer Nachsortierung. Die Ursache für solche Fehler kann in der Qualität des Codes selbst liegen, in einer ungünstigen Lesesituation beispielsweise mit einem Code unter einer Folie, die Reflektionen verursacht, und schließlich auch in Auswertungsfehlern etwa im Zuge einer Binarisierung von Grauwerten oder in Form von ungenau berechneten Abtastpositionen.

Eine Voraussetzung für eine hohe Leserate ist eine korrekte Segmentierung. Gerade im Falle von Codes mit flächigen Defekten durch Reflexionen oder andere Ursachen wird häufig ein zu kleiner Codebildbereich bestimmt, oder es werden mehrere Codebildbereichen auf demselben Code gebildet, weil die Merkmalsflächen durch einen Defekt auseinanderfallen. Auch kann der Codebildbereich zum Code verdreht sein, weil durch den Defekt ausgelöste Störungen eine Hauptvorzugsrichtung verändern. Derartige Segmentierungsfehler führen zu verkürzten Erfassungen und unvollständigen Teillesungen.

Es ist bekannt, die Segmentierung dadurch zu verbessern, dass sie mit anderen Parametern wiederholt oder mehrfach mit unterschiedlichen Parametern durchgeführt wird. Auch werden bisweilen Segmentierungen in unterschiedlichen Auflösungsebenen einer Bildpyramide durchgeführt. Das erfordert jeweils einen erheblichen Mehraufwand. In Codeleseanwendungen sind aber regelmäßig Echtzeitanforderungen gestellt, die es gar nicht zulassen, ein Bild mehrfach durchzurechnen oder auch nur mehrfach zu segmentieren. Es ist zudem fraglich, ob veränderte Parametrierungen oder Auflösungen die angesprochenen Segmentierungsfehler bei flächigen Defekten überhaupt in den Griff bekommen.

In der EP 3 428 835 B1 wird ein Verfahren zum Lesen eines optischen Codes vorgestellt, bei dem in einer Vorkorrektur an mindestens einer Position des Codes ein Codewort durch ein für diese Position bekanntes Codewort ersetzt wird. Die bekannten Codewörter sind parametriert, von einer Datenbank eines übergeordneten Systems vorgegeben oder aus einer Historie von gelesenen Codes eingelernt.

Die EP 4 258 160 A1 erweitert diesen Gedanken und führt sogenannte Schemata ein.

In einem Schema sind Erwartungen an häufig vorkommende Codekonstellationen formalisiert, beispielsweise als reguläre Ausdrücke. Dabei gibt es einen Fixanteil analog EP 3 428 835 B1, der einer in vielen Codes wiederkehrenden festen Abfolge von Zeichen entspricht, sowie einen variablen Anteil, der allgemeinere Regeln erfasst, wie dass an bestimmten Positionen nur Ziffern oder nur Buchstaben vorkommen. Schemata können verwendet werden, um eine aus einem optischen Code gelesene Botschaft als falsch gelesen zu erkennen oder sie zu korrigieren. Beide Dokumente erwähnen eine Segmentierung, diskutieren aber Segmentierungsfehler oder gar Ansätze zu deren Bereinigung nicht.

Es ist daher Aufgabe der Erfindung, das Lesen optischer Codes weiter zu verbessern.

Diese Aufgabe wird durch ein Verfahren zum Lesen eines optischen Codes nach Anspruch 1 sowie einen optischen Codeleser nach Anspruch 15 gelöst. Vorsorglich sei klargestellt, dass es sich um ein automatisch ablaufendes, insbesondere computerimplementiertes Verfahren handelt. Der optische Code enthält eine Botschaft, das ist derjenige Klartext, der durch den optischen Code vermittelt werden soll und darin codiert ist. Die Botschaft weist eine Zeichenkette mit einer Vielzahl von Zeichen auf. Um den Code und damit die Botschaft zu lesen, werden zunächst auf einem der bekannten und einleitend beschriebenen Wege Bilddaten mit dem optischen Code aufgenommen. In den Bilddaten wird dann vorzugsweise durch eine Vorverarbeitung, welche die Bilddaten beispielsweise anhand des Kontrasts segmentiert, ein interessierender Bereich (ROI, region of interest) mit dem optischen Code aufgefunden. Es kann in den Bilddaten mehrere optische Codes und mehrere interessierende Bereiche geben, in denen erst einmal in keine Richtung eine angestrebte Ein-zu-Eins-Zuordnung garantiert ist, stellvertretend wird die Verarbeitung eines interessierenden Bereiches mit einem optischen Code beschrieben, die auf andere interessierende Bereiche übertragbar ist. Die Bilddaten des interessierenden Bereichs werden in einem Decoder ausgewertet, der mit mindestens einem an sich bekannten und daher hier nicht näher erläuterten Verfahren versucht, die Botschaft aus dem optischen Code zu lesen. Es ist denkbar, die Erfindung zielt sogar auf solche Fälle, dass nur eine Teillesung möglich ist, also nur ein kleineres oder größeres Fragment der Botschaft gelesen wird.

Die gelesenen Zeichen der Botschaft werden mit einem Schema verglichen, vorzugsweise wiederholt mit mehreren Schemata. Ein Schema hat für mehreren Positionen der Botschaft eine Erwartung an das dort befindliche Zeichen. Das können, wie später noch ausdifferenziert, sehr konkrete Erwartungen an ein ganz bestimmtes sogenanntes fixes Zeichen oder allgemeinere Erwartungen an einen Wertebereich eines sogenannten variablen Zeichens sein, wie dass es ein Großbuchstabe oder eine Ziffer ist. Durch Vergleich der gelesenen Zeichen der Botschaft an diesen Positionen mit den Zeichen des Schemas wird festgestellt, ob das Schema zu der Botschaft passt. Dazu muss für einen Mindestanteil der durch das Schema erwarteten Zeichen eine Übereinstimmung mit den gelesenen Zeichen der Botschaft vorliegen, beispielsweise für mindestens zwei, mindestens drei, mindestens vier oder noch mehr Zeichen oder für einen Mindestanteil der aus dem Schema erwarteten Zeichen wie mindestens ein Drittel oder mindestens die Hälfte. Sind diese Bedingungen erfüllt, so ist ein passendes Schema gefunden. Bis hierhin ist das Verfahren angelehnt an die EP 3 428 835 B1 und die EP4 258 160 A1, auf die ergänzend für weitere Details und mögliche Ausgestaltungen verwiesen wird.

Die Erfindung geht von dem Grundgedanken aus, Vorwissen aus dem passenden Schema zu nutzen, um den interessierenden Bereich nachzubessern. Dazu wird aus dem Schema die erforderliche Größe eines interessierenden Bereichs abgeschätzt, in die ein dem Schema entsprechender optischer Code passen würde. Dann wird ein neuer interessierender Bereich dieser Größe erzeugt. Dabei gibt es verschiedene Möglichkeiten, wie der neue interessierende Bereich repräsentiert ist, etwa durch Grenzlinien, Ecken oder indem eine Kopie der Bilddaten nur des interessierenden Bereichs erzeugt wird. Diese verschiedenen Repräsentationen gelten im Übrigen schon für den ursprünglichen interessierenden Bereich der Segmentierung. Vorzugsweise wird im Anschluss erneut mit mindestens einem Decoder versucht, die Botschaft des optischen Codes in dem neuen interessierenden Bereich zu lesen.

Die Erfindung hat den Vorteil, dass auf Basis der Schemata eine intelligente Nachkorrektur der Segmentierungsergebnisse möglich wird. Dafür ist nicht erforderlich, die Segmentierung insgesamt beispielsweise mit verbesserten Parametern zu wiederholen, es wird nur ganz gezielt ein neuer interessierende Bereich für einen bestimmten optischen Code erzeugt, der nun dank des Vorwissens aus dem passenden Schema mit hoher Wahrscheinlichkeit den optischen Code vollständig umfasst. Daher geht nicht viel zusätzliche Rechenzeit verloren, die stattdessen in aufwändigere Decodierungen oder Aufbereitungen investiert werden kann, etwa eine Filterung, Auflösungserhöhung oder dergleichen innerhalb des neuen interessierenden Bereichs. Damit lässt sich die Leserate weiter steigern, besonders für Codes mit Defekten.

Der neue interessierende Bereich wird vorzugsweise nur dann erzeugt, wenn der optische Code nicht schon zuvor vollständig gelesen werden konnte. Ansonsten besteht kein Bedarf an einem neuen interessierenden Bereich, und es ist folglich auch schon überflüssig, die Größe eines neuen interessierenden Bereichs zu berechnen. Vollständig bedeutet in diesem Zusammenhang erst einmal nur in voller Länge, es kann noch auf diversen Wegen validiert werden, ob die Botschaft auch richtig gelesen wurde. Ein neuer interessierender Bereich würde aber in diesem Zusammenhang nicht helfen, außer es stellt sich im Zuge der Validierungen heraus, dass das Schema doch nicht passt und der Code also tatsächlich nicht vollständig gelesen werden konnte.

Der neue interessierende Bereich wird bevorzugt nur dann erzeugt, wenn der optische Code gemäß dem dazu passenden Schema nicht auch bereits in den mittels der Segmentierung gefundenen interessierenden Bereich passt. Auch in dieser Situation, dass der ursprüngliche interessierende Bereich bereits groß genug war, würde ein neuer interessierender Bereich nichts mehr verbessern können. Sofern Lesefehler auftraten, sind sie jedenfalls nicht auf die Segmentierung zurückzuführen. Ob der optische Code in den interessierenden Bereich passt, bemisst sich nicht allein an der Größe, der interessierende Bereich kann auch gegenüber dem optischen Code verschoben und/oder verdreht sein. In solchen Fällen ist es wieder sinnvoll, einen neuen interessierenden Bereich zu bestimmen.

Die Größe des neuen interessierenden Bereichs wird bevorzugt aus einer Modulgröße, die aus den gelesenen Zeichen der Botschaft ermittelt wird, und einer gemäß dem passenden Schema erwarteten Anzahl von Zeichen der Botschaft bestimmt. Die Modulgröße bezeichnet die Größe eines einzelnen Codemoduls vorzugsweise in der Einheit Pixel pro Modul. Da mindestens ein Fragment der Botschaft gelesen werden konnte, liegt die Modulgröße entweder bereits im Decoder vor oder kann jedenfalls nun sehr leicht bestimmt werden. Aus dem Schema ist die Anzahl der erwarteten Zeichen bekannt. Die Größe oder eine untere Schranke der Größe bestimmt sich dann beispielsweise einfach als das Produkt aus Modulgröße und Anzahl.

Anhand der gelesenen Zeichen der Botschaft und dem passenden Schema wird bevorzugt eine Position des neuen interessierenden Bereichs bestimmt, in der erwartet wird, dass der optische Code vollständig innerhalb des neuen interessierenden Bereichs liegt. Wie schon angesprochen, kann ein interessierender Bereich auch gegenüber dem optischen Code verschoben sein. Aus den gelesenen Zeichen der Botschaft und dem passenden Schema ist sehr einfach feststellbar, welche Fehlbereiche es in den verschiedenen Richtungen gibt. Beispielsweise kann für fehlende Zeichen am Anfang und/oder Ende der Botschaft analog der Berechnung des Vorabsatzes anhand der Modulgröße eine Verschiebung der linken und/oder rechten Grenze des interessierenden Bereichs erfolgen.

Anhand der gelesenen Zeichen der Botschaft wird bevorzugt eine Orientierung des neuen interessierenden Bereichs bestimmt, in der erwartet wird, dass der optische Code vollständig innerhalb des neuen interessierenden Bereichs liegt. Die im Decoder angenommene Vorzugsrichtung eines optischen Codes kann gerade dann, wenn nur ein Fragment in dem interessierenden Bereich liegt, von der tatsächlichen Orientierung abweichen. Der neue interessierende Bereich kann dann entsprechend auch in seiner Orientierung angepasst werden, damit insbesondere in dem neuen interessierenden Bereich hinzukommende Erweiterungsbereiche auch tatsächlich die fehlenden Codeabschnitte abdecken.

Die Position und/oder Orientierung des neuen interessierenden Bereichs wird bevorzugt auf ein Start- oder Stopzeichen der gelesenen Zeichen der Botschaft bezogen. Das sind besonders markante Referenzen, das Start- und Stopzeichen ist besonders charakteristisch und sowohl zu erkennen als auch wegen der Endlage zur Festlegung von Position und/oder Orientierung besonders geeignet. Alternativ können andere noch dekodierbare Zeichen herangezogen werden.

Ein Schema enthält bevorzugt für mindestens eine Position der Botschaft ein fixes Zeichen, das in zu lesenden optischen Codes an dieser Position erwartet wird. Das Schema hat folglich einen Fixanteil mit Positionen, in denen jeweils ganz bestimmte Zeichen erwartet werden, wie der Großbuchstabe "F" oder die Ziffer "4".

Ein Schema wird bevorzugt als zu der Botschaft passend angesehen, wenn es in einem Mindestanteil der fixen Zeichen, insbesondere mindestens der Hälfte der fixen Zeichen oder allen fixen Zeichen, mit der Botschaft übereinstimmt. Im Gegensatz zur ursprünglichen Bedingung werden hier speziell fixe Zeichen und nicht irgendwelche Zeichen des Schemas verlangt. Da die Erfindung vor allem Situationen betrifft, in denen bereits nur ein Fragment des optischen Codes gelesen werden konnte, sollte vorteilhafterweise eine vergleichsweise strenge Übereinstimmung in vielen fixen Zeichen gefordert werden, sonst gibt es zu viele nur scheinbare Passungen eines Schemas, bei denen die Gefahr hoch ist, dass ein falsch dimensionierter, lokalisierter und/oder orientierter neuer interessierender Bereich bestimmt wird.

Ein Schema enthält bevorzugt für mindestens eine Position der Botschaft ein variables Zeichen, das in zu lesenden Codes an dieser Position erwartet wird, wobei ein variables Zeichen auf einen Teilbereich der möglichen Zeichen, nicht aber ein fixes Zeichen festgelegt ist. Das Schema weist damit einen variablen Anteil auf. An Positionen eines variablen Zeichens wird kein bestimmtes Zeichen erwartet, sondern ein Zeichen, das nur in einem Teilbereich der insgesamt möglichen Zeichen variiert. Typische Beispiele für ein variables Zeichen sind Ziffern oder Buchstaben. Es ist denkbar, nur anhand variabler Zeichen zu prüfen, ob ein Schema passt. Wenn also ein Schema an einer Position beispielsweise einen Buchstaben erwartet, aber in der Botschaft eine Ziffer vorfindet, passt es nicht. Vorzugsweise wird der variable Anteil nur ergänzend zu dem Fixanteil herangezogen, da ansonsten wegen der inhärenten Mehrdeutigkeiten zu leicht ein falsches Schema als passend angesehen wird. Als Zusatzbedingung sind variable Zeichen jedoch hilfreich.

Ein Schema weist bevorzugt mindestens einen der folgenden Teilbereiche der möglichen Zeichen eines variablen Zeichens auf: nicht druckbare Zeichen, Sonderzeichen, Ziffern, Buchstaben, Kleinbuchstaben, Großbuchstaben. Das sind besonders geeignete Beispiele für Unterteilungen oder Klassen der in einer Botschaft denkbaren Zeichen. Im Prinzip könnte die Unterteilung ganz willkürlich erfolgen. Derartige semantische Klassen erleichtern aber dem Benutzer das Verständnis, so dass die Anwendung leichter diagnostiziert und optimiert werden kann. Zudem sind Regelmäßigkeiten in Codes in der Praxis ebenfalls eher in Form semantischer Klassen als beliebige Unterteilungen zu finden. Häufig sind die möglichen Zeichen eines Codes durch die Zahlen 0..127 des ASCII-Codes repräsentiert. Die genannten Teilbereiche können im ASCII-Code wiedergefunden werden.

Ein Schema enthält vorzugsweise für jede Position ein fixes Zeichen oder ein variables Zeichen. Ein solches Schema kann als vollständig bezeichnet werden, da es keine Positionen ohne Erwartung gibt, sondern für jede Position der Botschaft aus dem Schema bekannt ist, welches fixe Zeichen dort steht beziehungsweise welcher Teilbereich möglicher Zeichen dort als variables Zeichen möglich ist. Ein Schema kann alternativ unvollständig sein, es gibt dann mindestens ein völlig freies Zeichen in den Grenzen der grundsätzlichen Codespezifikation, oder es ist nicht einmal bekannt, wie viele Zeichen es noch geben kann. Das kann insbesondere ein vorübergehender Zustand während eines Einlernens eines Schemas sein.

Ein Schema weist bevorzugt eine Codelänge auf, d.h. die Gesamtzahl der Zeichen einer zu dem Schema passenden Botschaft. Vorzugsweise ist das ein Parameter des Schemas, der die Codelänge direkt zugänglich macht. Ein vollständiges Schema enthält diese Information implizit, kann aber ergänzend auch einen eigenen Parameter für die Codelänge aufweisen. Die Codelänge kann auch für ein unvollständiges Schema bekannt sein, in dem also mindestens für eine Position keine Erwartung besteht, welches Zeichen sich dort befindet. Die Codelänge kann in die Bestimmung der benötigten Größe des neuen interessierenden Bereichs einfließen. Ist keine Codelänge vorhanden, weder implizit noch explizit, so kann immerhin noch ein neuer interessierender Bereich bestimmt werden, in dem ein dem Schema entsprechender optischer Code vollständig Platz findet. Das ist eventuell immer noch zu klein, weil ja das Schema unvollständig ist, aber doch möglicherweise besser als der ursprüngliche interessierende Bereich, zumal das Vorgehen iteriert werden kann und in der nächsten Iteration gegebenenfalls ein besseres Schema als passend gefunden wird.

Ein Schema wird bevorzug als regulärer Ausdruck formuliert, der für die jeweiligen Positionen die zulässigen Zeichen angibt. Ein regulärer Ausdruck erleichtert es dem Benutzer, das Schema zu verstehen und gegebenenfalls zu editieren. Zugleich wird die interne Verarbeitung erleichtert und die Fehleranfälligkeit beim Programmieren der Decoder verringert. Alternativ ist eine proprietäre Definition von Schemata vorstellbar, die aber vorzugsweise die Übersichtlichkeit und formale Regelmäßigkeit regulärer Ausdrücke zumindest annähernd erreicht.

Zum Einlernen eines Schemas wird vorzugsweise eine Vielzahl gelesener Botschaften ausgewertet, wobei insbesondere die gelesenen Botschaften im Betrieb erfasst oder aus einem Logfile geladen werden. Zwar wäre grundsätzlich denkbar, ein Schema unmittelbar vorzugeben, sei es durch Parametrierung in einer insbesondere grafischen Benutzerschnittstelle oder durch Einlesen mittels Datenträger oder Netzwerk. Für die Diagnose oder Verbesserung von Schemata ist das durchaus von Vorteil. In dieser Ausführungsform ist aber ein automatisches Einlernen vorgesehen, das den Benutzer von dieser Aufgabe befreit. Das Einlernen basiert auf gelesenen Botschaften, die vorzugsweise aus dem laufenden oder einem früheren Betrieb stammen können, insbesondere einem Logfile. Denkbar ist weiterhin ein Einlernen oder eine Anpassung von Schemata während des Betriebs. Es ist von Vorteil, wenn bekannt ist, dass die Botschaften, aus denen das Schema eingelernt wird, korrekt gelesene Botschaften sind. Vorzugsweise werden zudem nur Leseergebnisse verwendet, die von Anfang an korrekt gelesen wurden, insbesondere keine Korrektur aus der Prüfsumme erfahren haben. Beispielsweise durch statistische Verfahren ließe sich aber aus gelesenen Botschaften selbst dann ein Schema ableiten, wenn in einigen Botschaften Zeichen fehlen und/oder einige Botschaften falsche Zeichen enthalten. Beim Einlernen findet vorzugsweise eine Sortierung der gelesenen Botschaften statt, damit nur Codes aus einer Codefamilie Eingang finden beziehungsweise mehrere Schemata für mehrere Codefamilien eingelernt werden können. Kriterien für die Sortierung können die Codelänge, aber auch Teile der Schemata selbst sein, insbesondere unterschiedliche Fixanteile. Es kann also im Laufe des Einlernens vorkommen, dass aus einem Schema aufgrund von Unterschieden im Fixanteil zwei oder mehr Schemata gebildet werden.

Ein Schema wird bevorzugt aus einer Verteilung gelesener Zeichen an den jeweiligen Positionen der gelesenen Botschaft eingelernt. Es wird demnach festgestellt, welche Zeichen an den jeweiligen Positionen der Botschaft vorkommen. Es kann zudem gezählt werden, wie oft ein Zeichen an der jeweiligen Position gelesen wurde.

Vorzugsweise wird an Positionen, an denen immer das gleiche Zeichen gelesen wird, das entsprechende fixe Zeichen eingelernt, und an Positionen, an denen verschiedene Zeichen gelesen werden, wird der davon gebildete Teilbereich als variables Zeichen eingelernt. Ein immer wieder gleich an einer Position gelesenes Zeichen wird damit dem Fixanteil des Schemas zugeschlagen. Es können dabei zusätzliche Vorgaben gemacht werden, etwa dass der Fixanteil einen Block benachbarter Zeichen bildet oder am Anfang oder Ende der Botschaft steht. Variieren an einer Position die gelesenen Zeichen, so wird der davon aufgespannte Teilbereich als variables Zeichen des Schemas angesehen. Dieser Teilbereich kann gegebenenfalls noch erweitert werden, um einen besonderen Teilbereich in Gänze abzudecken. Wurden beispielsweise an einer Position die Zeichen 1, 3, 6 gelesen, dann kann der Teilbereich je nach Ausführungsform genau aus diesen Zeichen {1, 3, 6} bestehen, aus der ganzen Spanne {1, 2, 3, 4, 5, 6} zwischen den gelesenen kleinsten und größten Zeichen 1, 6 unter Einschluss auch der nicht gelesenen Zeichen 2, 4, 5 oder aus der vollständigen Klasse der Ziffern. Wenn an einer Position praktisch beliebige, zufällige Zeichen gelesen wurden, dann kann für das Schema hier weder ein Fixanteil noch ein nützlicher variabler Anteil eingelernt werden. Es verbleibt eine Freistelle im Schema, ein variables Zeichen praktisch ohne Einschränkung, oder das Einlernen wird abgebrochen. Weiterhin kann versucht werden, eine Teilmenge der gelesenen Botschaften zu finden, in denen Ausreißer eliminiert sind, die diese Situation herbeigeführt haben. Die Ausreißer können ausgegeben werden, damit der Benutzer eine Möglichkeit hat zu prüfen, ob es berechtigt ist, diese gelesenen Botschaften in dem Schema nicht zu berücksichtigen.

Ein Schema wird bevorzugt zunächst mit leeren Bereichen je Position initialisiert, das jeweilige erste an einer Position gelesene Zeichen wird für diese Position gespeichert, und jedes an einer Position nach dem ersten Zeichen für diese Position gelesene Zeichen, das für diese Position noch unbekannt war, erweitert den Teilbereich für diese Position so, dass das gelesene Zeichen umfasst ist. Dies ist eine vorteilhafte Implementierung des Einlernens von Schemata. Dabei wird wie immer vorzugsweise sortiert, so dass die gelesenen Botschaften, aus denen das jeweilige Schema eingelernt wird, derselben Codefamilie zugehören. Initialisiert wird ein leeres Schema, das zunächst für keine Position Vorwissen kennt. Ein jeweils an einer Position gelesenes Zeichen wird zunächst als fixes Zeichen des Schemas betrachtet. Das sollte sich dann aber über die weiteren gelesenen Botschaften bestätigen. Es kann auch verlangt werden, dass ein fixes Zeichen mindestens m-mal oder m-aus-n-mal gelesen wurde. Wird an einer Position ein anderes Zeichen gelesen, so kann dies gemäß einem m-aus-n-Kriterium als Ausreißer betrachtet werden. Vorzugsweise spannen aber die bisher an dieser Position gelesenen Zeichen den Teilbereich eines variablen Zeichens auf. Mit jedem neuen gelesenen Zeichen an einer Position eines variablen Zeichens kann sich der Teilbereich erweitern. Vorzugsweise sollte der Teilbereich auf eine Klasse beschränkt bleiben, wie Ziffern oder Buchstaben, ansonsten sind ein besonders großer Teilbereich beziehungsweise eine Fehlermeldung des Einlernens denkbar, weil an dieser Position keine Regelmäßigkeit oder Systematik erkennbar ist, die sich in einem Schema sinnvoll erfassen lässt.

In bevorzugter Weiterbildung ist ein optoelektronischer Codeleser mit mindestens einem Lichtempfangselement zur Erzeugung von Bilddaten aus Empfangslicht und mit einer internen und/oder externen Steuer- und Auswertungseinheit vorgesehen, in der ein erfindungsgemäßes Verfahren zum Lesen von optischen Codes implementiert ist.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Übersichtsdarstellung eines Codelesers, der beispielhaft über einem Förderband montiert ist, auf dem Objekte mit zu lesenden optischen Codes gefördert werden;
- Fig. 2: einige Beispiele für Schemata mit Erwartungen an Zeichen eines optischen Codes an bestimmten Positionen;
- Fig. 3: ein beispielhaftes Ablaufdiagramm zur Bestimmung eines neuen interessierenden Bereichs anhand eines Schemas, das zu der mindestens teilweise gelesenen Botschaft passt;
- Fig. 4: eine Illustration eines zum Ende des Codes erweiterten neuen interessierenden Bereichs; und
- Fig. 5: eine Illustration eines zu beiden Seiten des Codes erweiterten neuen interessierenden Bereichs.

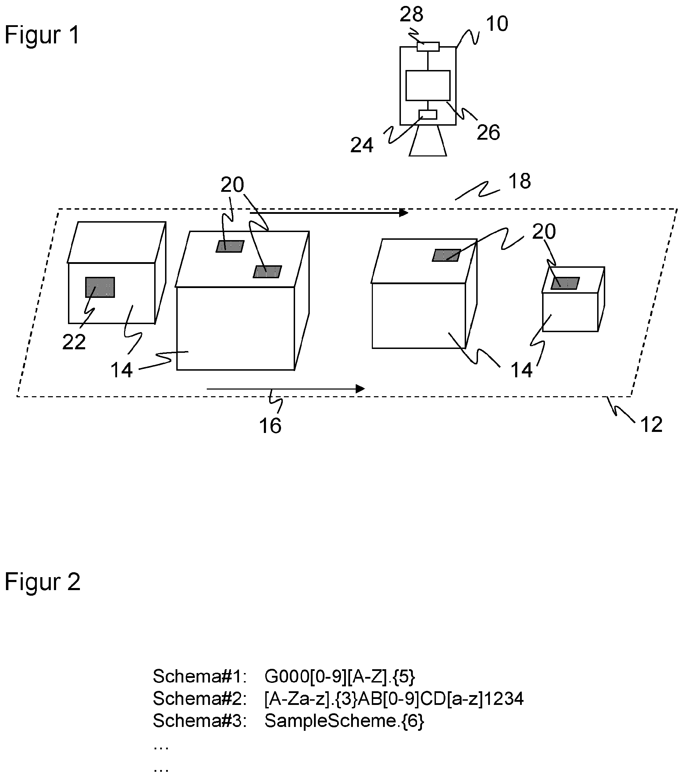

Figur 1 zeigt einen optoelektronischen Codeleser 10, der über einem Förderband 12 montiert ist, welches Objekte 14, wie durch den Pfeil 16 angedeutet, durch den Erfassungsbereich 18 des Codelesers 10 fördert. Die Objekte 14 tragen an ihren Außenflächen Codebereiche 20, die von dem Codeleser 10 erfasst und ausgewertet werden. Diese Codebereiche 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel. Diese stationäre Anwendung des Codelesers 10 an einem Förderband ist in der Praxis sehr häufig. Die Erfindung bezieht sich aber auf das Lesen von Codes beziehungsweise den Codeleser 10 selbst, so dass dieses Beispiel nicht einschränkend verstanden werden darf. Beispielsweise können Codes auch von Hand abgescannt, oder es kann in einer Präsentationsanwendung ein Code oder ein Objekt 14 mit einem Code in das Lesefeld des Codelesers 10 gehalten werden.

Der Codeleser 10 erfasst mit einem Lichtempfänger 24 Bilddaten der geförderten Objekte 14 und der Codebereiche 20, die von einer Steuer- und Auswertungseinheit 26 mittels Bildauswertung und Decodierverfahren weiterverarbeitet werden. Die Steuer- und Auswertungseinheit 26 umfasst beispielsweise mindestens einen Rechenbaustein wie einen Mikroprozessor oder eine CPU (Central Processing Unit), ein FPGA (Field Programmable Gate Array), einen DSP (Digital Signal Processor), ein ASIC (Application-Specific Integrated Circuit), einen Kl-Prozessor, eine NPU (Neural Processing Unit), eine GPU (Graphics Processing Unit), eine VPU (Video Processing Unit) oder dergleichen. Es kommt ferner für die Erfindung nicht auf das konkrete Bildgebungsverfahren an, so dass der Codeleser 10 nach irgendeinem an sich bekannten Prinzip aufgebaut sein kann. Beispielsweise wird jeweils nur eine Zeile erfasst, sei es mittels zeilenförmigem Bildsensor oder einem Scanverfahren, und die Steuer- und Auswertungseinheit fügt die im Laufe der Förderbewegung erfassten Zeilen zu den Bilddaten zusammen. Mit einem matrixförmigen Bildsensor lässt sich schon in einer Aufnahme ein größerer Bereich erfassen, wobei auch hier das Zusammenfügen von Aufnahmen sowohl in Förderrichtung als auch quer dazu möglich ist. Die zentrale Funktion des Codelesers 10 ist das Decodieren, d.h. das Lesen der in einem optischen Code codierten Botschaft als Klartext. Die Botschaft ist eine Zeichenkette aus Nutzzeichen vorzugsweise mit mindestens einem Prüfzeichen, das typischerweise am Ende steht. Über eine Schnittstelle 28 gibt der Codeleser 10 Informationen aus, wie aus den Codes gelesene Botschaften oder Bilddaten.

Nachstehend wird unter Bezugnahme auf die Figuren 2 bis 5 eine Verbesserung der Segmentierung zum Auffinden von interessierenden Bereichen (ROI, Region of Interest) entsprechend einem Codebereich 20 erläutert. Vorzugsweise erfolgt dies in der Steuer- und Auswertungseinheit 26. Ebenso ist aber denkbar, Bilddaten oder Zwischenergebnisse über die Schnittstelle 28 auszugeben und zumindest einen Teil der Segmentierung, Decodierung, gegebenenfalls verbesserten Bestimmung von interessierenden Bereichen und erneuten Decodierung in ein übergeordnetes System auszulagern, wie einen Steuerungsrechner, ein Netzwerk oder eine Cloud. Vorverarbeitungen der Bilddaten zur Segmentierung und zum Auffinden von Codebereichen 20 sowie die Decodierung an sich werden als bekannt vorausgesetzt und nicht beschrieben.

Figur 2 zeigt einige Beispiele für Schemata mit Erwartungen an Zeichen eines optischen Codes an bestimmten Positionen. Es kann eine beliebige Anzahl derartiger Schemata geben, die insbesondere vorgegeben oder mit einem der einleitend schon erläuterten Verfahren eingelernt werden, gezeigt sind beispielhaft drei Schemata. Ein Schema weist einen Fixanteil und/oder einen variablen Anteil auf. An Positionen des Fixanteils wird genau ein bestimmtes Zeichen erwartet, an Positionen des variablen Anteils ein Zeichen in einem bestimmten Bereich. Diese Erwartungen sind in beliebiger Syntax in dem Schema zusammengefasst, die gezeigte Repräsentation ist vorteilhaft, aber zugleich rein beispielhaft. Die Vorgaben an Fixanteil und/oder variablen Anteil können auf beliebige Weise notiert werden.

Das Schema#1 erwartet in seinen ersten vier Zeichen als Fixanteil die Zeichenfolge "G000", dann in einem variablen Anteil zunächst eine Ziffer und dann einen Großbuchstaben. Darauf folgen dann noch fünf beliebige Zeichen. Die Länge einer zu dem Schema passenden Botschaft beträgt damit mindestens elf Zeichen, diese Codelänge kann zusätzlich explizit in dem Schema angegeben sein. Das Schema#2 erwartet zunächst zwei beliebige Buchstaben, dann drei beliebige Zeichen, gefolgt von einem ersten Fixanteil mit der Zeichenfolge "AB", einer weiteren Ziffer, einem zweiten Fixanteil mit der Zeichenfolge "CD", einem kleinen Buchstaben und einem dritten Fixanteil mit der Zeichenfolge "1234". Das Schema#3 ist ein besonders künstliches Beispiel für die nachfolgenden Erläuterungen, es erwartet den Fixanteil "SampleScheme", gefolgt von sechs beliebigen Zeichen.

Andere denkbare Schemata umfassen einen Fixanteil mit mehr oder weniger Zeichen, zusammenhängend oder verteilt am Anfang, Ende oder mitten in dem Schema sowie keinen oder einen anderen variablen Anteil und sonstige Variationen. Ein Schema kann zusätzlich zu den hier beschriebenen Funktionen auch dazu verwendet werden, eine gelesene Botschaft zu korrigieren. Zu den möglichen Ausgestaltungen eines Schemas und dessen Anwendung auf einen Code wird nochmals ergänzend auf die EP 4 258 160 A1 verwiesen.

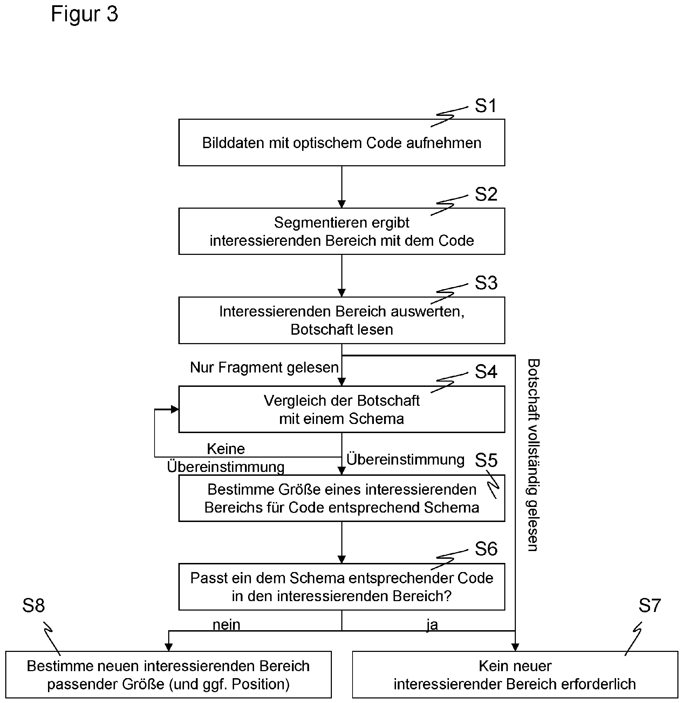

Figur 3 zeigt ein beispielhaftes Ablaufdiagramm zur Bestimmung eines neuen interessierenden Bereichs anhand eines Schemas, das zu der mindestens teilweise gelesenen Botschaft passt. Je nach Ausführungsform werden alle Schritte oder nur einige Schritte ausgeführt.

In einem Schritt S1 werden Bilddaten mit einem optischen Code aufgenommen. In einem Schritt S2 erfolgt mit einem an sich bekannten Verfahren beispielsweise anhand der Kontraste und/oder mit einem neuronalen Netz eine Segmentierung, in der ein interessierender Bereich mit dem Code aufgefunden wird. Dabei wird hier nur ein interessierender Bereich betrachtet, in der Praxis gibt es meist mehrere interessierende Bereiche, die analog nacheinander oder parallel verarbeitet werden.

In einem Schritt S3 werden die Bilddaten des interessierenden Bereichs ausgewertet, um die in dem Code enthaltene Botschaft zu lesen. Wenn das vollständig gelingt, kann das Verfahren abgebrochen werden, es muss dann kein neuer interessierender Bereich bestimmt werden. In einigen Fällen gelingt nur eine Teillesung, die nur einen Teil der Zeichen der Botschaft oder ein Codefragment erfasst. Gerade Codes mit Defekten sind besonders schwierig vollständig zu dekodieren, und sie häufig sind zugleich schon schwierig zu segmentieren. Dann entstehen häufig interessierende Bereiche, die den tatsächlichen Codebereich nicht vollständig erfassen und Teillesungen auf dem Codebereich verursachen. Das restliche Verfahren dient einer Nachbesserung im Falle von Teillesungen in dem Versuch, durch einen neuen interessierenden Bereich den Code doch noch vollständig zu lesen.

In einem Schritt S4 wird die gelesene Botschaft beziehungsweise das Codefragment mit einem Schema verglichen. Es kann eine Vielzahl von Schemata in Frage kommen, die dann alle oder in einer Teilauswahl nacheinander für den Vergleich herangezogen werden. Bei dem Vergleich wird geprüft, ob sich in der Botschaft ein Mindestanteil an Zeichen aus dem Schema wiederfinden. Die Bedingung kann an den Fixanteil und/oder den variablen Anteil gestellt sein. Der Fixanteil ist trennschärfer und wird daher vorzugsweise stärker oder sogar allein dem Vergleich zugrunde gelegt. Um zu vermeiden, dass Nachkorrekturen wegen zu vager Übereinstimmung scheitern, kann ein strenges Kriterium verlangt werden, wie dass der gesamte Fixanteil oder beispielsweise bis auf höchstens ein fixes Zeichen übereinstimmt. Wird ein passendes Schema gefunden, wird das Verfahren damit fortgesetzt. Wenn keines der bekannten Schemata passt, wird abgebrochen.

Schemata können auch auf vollständig gelesene Botschaften angewandt werden, beispielsweise um sie zu korrigieren oder zu validieren. Abweichend von den Erläuterungen zu Schritt S3 kann also das Verfahren alternativ nach dem vollständigen Lesen einer Botschaft noch nicht abgebrochen werden. Sollte sich anhand des Schemas herausstellen, dass doch nur ein Codefragment gelesen werden, so kann das Verfahren dann auch mit dem Ziel der Bestimmung eines neuen interessierenden Bereichs fortgesetzt werden.

In einem Schritt S5 wird das Vorwissen des passenden Schemas genutzt, um die Anzahl der Zeichen zu bestimmen oder abzuschätzen, die der zu lesende Code aufweisen müsste. Durch das zumindest teilweise erfolgreiche Lesen der Botschaft im Schritt S3 ist ferner die Modulgröße bekannt oder zumindest sehr einfach bestimmbar, also wie groß ein einzelnes Codemodul in Pixeln ist. Aus der Anzahl der Zeichen und der Modulgröße kann sehr einfach die erforderliche Größe eines interessierenden Bereichs berechnet werden, in die der zu lesende Code passen würde. Zu beachten ist noch, dass die Länge der Botschaft gemäß Schema in Nutzzeichen oder Klartext nicht unbedingt direkt der Anzahl von Codeelementen des optischen Codes entspricht. Dazwischen liegt für die meisten Codearten noch eine Codierungsvorschrift. Es kann beispielsweise sein, dass mehrere Codeelemente ein Nutzzeichen codieren, und es sind womöglich in dem Klartext nicht mehr sichtbare Steuerzeichen vorhanden. Sowohl die Codierungsvorschrift als auch die Steuerzeichen sind aber bekannt, so dass die richtige Größe bestimmt werden kann, und selbst das unmittelbare Produkt aus Anzahl Nutzzeichen und Modulgröße ist schon eine gute Abschätzung, der gegebenenfalls ein pauschaler Zuschlag für die genannten Effekte gegeben werden kann.

In einem Schritt S6 wird geprüft, ob ein Code der in Schritt S5 abgeschätzten Größe in den vorhandenen interessierenden Bereich passt. Da es nicht unbedingt ausreicht, wenn der interessierende Bereich groß genug ist, sondern auch noch dessen Lage und Orientierung zum tatsächlichen Codebereich passen sollte, können für mehr Verlässlichkeit Zusatzfaktoren wie die verwendete Vorzugsrichtung oder die Lage bestimmter Zeichen berücksichtigt werden. Besonders Geeignete Ankerpunkte sind hier ein Start- oder Stopzeichen.

Ist in Schritt S6 festgestellt, dass der Code in den interessierenden Bereich passt, so wird das Verfahren in einem Schritt S7 beendet. Es lag dann nicht an der Segmentierung, dass nur eine Teillesung möglich war, oder jedenfalls ist ein etwaiger Segmentierungsfehler nicht durch Nachkorrekturen auszugleichen, die sich aus dem passenden Schema ableiten lassen. Beispielsweise wurde der Code in Gänze von dem interessierenden Bereich erfasst, enthält aber Defekte, in denen Zeichen unkorrigierbar unlesbar bleiben.

In einem Schritt S8 ist festgestellt, dass der ursprüngliche interessierende Bereich zu klein, verschoben und/oder verdreht war. Deshalb wird ein neuer interessierender Bereich passender Größe bestimmt, der als in mindestens einer Richtung entsprechend der geforderten Größe erweitert und gegebenenfalls verdreht wird. Der neue interessierende Bereich wird vorzugsweise an einem Start- oder Stopzeichen verankert. Die Bilddaten in dem neuen interessierenden Bereich werden nun erneut durch mindestens einen Decoder verarbeitet, um nun die Botschaft möglichst doch noch vollständig zu lesen. Das erläuterte Verfahren kann dabei auch iteriert werden, womöglich passt nach den weiteren Leseversuchen ein anderes Schema mit dem Resultat eines anderen potentiell geeigneten neuen interessierenden Bereichs.

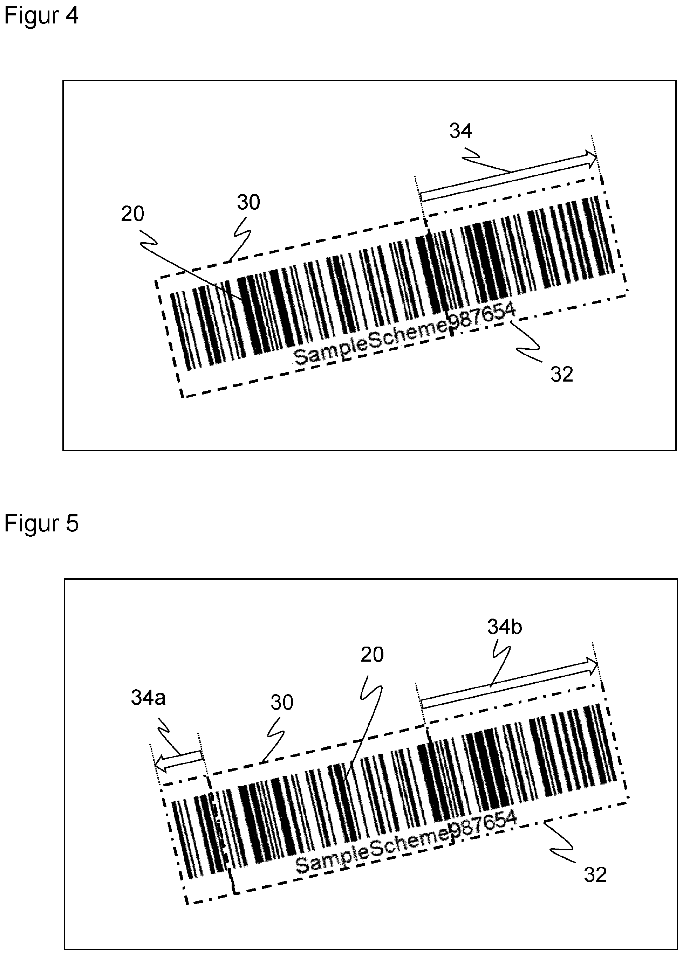

Figur 4 illustriert das Verfahren an einem Beispiel. Dargestellt ist ein Barcode, der den Klartext "SampleScheme987654" codiert. In dem interessierenden Bereich 30 der ursprünglichen Segmentierung konnte aber nur das Fragment "SampleSche" gelesen werden. Zu beachten ist, dass die Grenze in den Codeelementen und nicht in dem darunter redundant abgedruckten Text relevant ist. Dieses Fragment stimmt ausreichend mit dem Schema#3 der Figur 2 überein. Somit kann die Erwartung aufgestellt werden, dass noch acht Zeichen fehlen und der interessierende Bereich 30 dafür zu klein ist. Es wird berechnet, wie groß ein neuer interessierender Bereich 32 sein müsste, um den gesamten dem Schema entsprechenden Code zu umfassen, und mit diesem neuen interessierenden Bereich 32 können weitere Decodierungen versucht werden. In diesem Beispiel ist der neue interessierende Bereich 32 zum Codeende hin erweitert, wie durch einen Pfeil 34 dargestellt.

Figur 5 variiert das Beispiel der Figur 4. In diesem Fall ist der interessierende Bereich 30 der ursprünglichen Segmentierung etwas kleiner. Es fehlt auch der Anfang der Botschaft, es konnte nur das Fragment "ampleSche" gelesen werden. Das Beispiel funktioniert nur, wenn der Decoder überhaupt in der Lage ist, ein Codefragment zu lesen, in dem sowohl das Start- als auch das Stopzeichen fehlt. Es werden Übereinstimmungskriterien unterstellt, nach denen Schema#3 immer noch passt. Es reicht nun aber nicht, in einem neuen interessierenden Bereich 32 hinten etwas anzuhängen. Vielmehr muss der neue interessierende Bereich erweitert und verschoben werden, was gleichwertig dazu ist, ihn beidseitig zu erweitern, wie durch Pfeile 34a-b dargestellt.

Über die gezeigten Beispiele hinaus kann es sinnvoll sein, den neuen interessierenden Bereich 32 zu verdrehen, wenn die Vorzugsrichtung des Codes nicht zu derjenigen des ursprünglichen interessierenden Bereichs 30 passt. Zudem sind Beispiele eines 1D-Codes gezeigt. Bei einer analogen Erweiterung für 2D-Codes kann es ein- oder beidseitige Größenanpassungen in beiden Dimensionen geben.

## Patentansprüche

1. Verfahren zum Lesen eines optischen Codes (20), der eine Botschaft codiert, die eine Zeichenkette mit einer Vielzahl von Zeichen aufweist, mit den Schritten Aufnehmen von Bilddaten mit dem optischen Code (20),
Segmentieren der Bilddaten, um einen interessierenden Bereich (30) mit dem optischen Code (20) aufzufinden,
Auswerten der Bilddaten innerhalb des interessierenden Bereichs (30), um die Botschaft zu lesen,
Vergleichen der gelesenen Zeichen der Botschaft mit mindestens einem Schema, das für mindestens eine Position der Botschaft eine Erwartung über ein Zeichen an dieser Position des zu lesenden optischen Codes (20) enthält, und dadurch Bestimmung eines zu der Botschaft passendes Schemas, das in einem Mindestanteil der Zeichen mit der gelesenen Botschaft übereinstimmt, **dadurch gekennzeichnet,**
**dass** aus dem Schema eine Größe eines interessierenden Bereichs bestimmt wird, in den ein zu dem Schema passender optischer Code (20) hineinpasst, und dass ein neuer interessierender Bereich (32) dieser Größe erzeugt wird.

2. Verfahren nach Anspruch 1,
wobei der neue interessierende Bereich (32) nur dann erzeugt wird, wenn der optische Code (20) nicht schon zuvor vollständig gelesen werden konnte.

3. Verfahren nach Anspruch 1 oder 2,
wobei der neue interessierende Bereich (34) nur dann erzeugt wird, wenn der optische Code (20) gemäß dem dazu passenden Schema nicht auch bereits in den mittels der Segmentierung gefundenen interessierenden Bereich (30) passt.

4. Verfahren nach einem der vorhergehenden Ansprüche,
wobei die Größe des neuen interessierenden Bereichs (32) aus einer Modulgröße, die aus den gelesenen Zeichen der Botschaft ermittelt wird, und einer gemäß dem passenden Schema erwarteten Anzahl von Zeichen der Botschaft bestimmt wird.

5. Verfahren nach einem der vorhergehenden Ansprüche,
wobei anhand der gelesenen Zeichen der Botschaft und dem passenden Schema eine Position des neuen interessierenden Bereichs (32) bestimmt wird, in der erwartet wird, dass der optische Code (20) vollständig innerhalb des neuen interessierenden Bereichs (32) liegt.

6. Verfahren nach einem der vorhergehenden Ansprüche,
wobei anhand der gelesenen Zeichen der Botschaft eine Orientierung des neuen interessierenden Bereichs (32) bestimmt wird, in der erwartet wird, dass der optische Code (20) vollständig innerhalb des neuen interessierenden Bereichs (32) liegt.

7. Verfahren nach Anspruch 6,
wobei die Position und/oder Orientierung des neuen interessierenden Bereichs (32) auf ein Start- oder Stopzeichen der gelesenen Zeichen der Botschaft bezogen wird.

8. Verfahren nach einem der vorhergehenden Ansprüche,
wobei ein Schema für mindestens eine Position der Botschaft ein fixes Zeichen enthält, das in zu lesenden optischen Codes (20) an dieser Position erwartet wird.

9. Verfahren nach Anspruch 8,
wobei ein Schema als zu der Botschaft passend angesehen wird, wenn es in einem Mindestanteil der fixen Zeichen, insbesondere mindestens der Hälfte der fixen Zeichen oder allen fixen Zeichen, mit der Botschaft übereinstimmt.

10. Verfahren nach einem der vorhergehenden Ansprüche,
wobei ein Schema für mindestens eine Position der Botschaft ein variables Zeichen enthält, das in zu lesenden Codes (20) an dieser Position erwartet wird, wobei ein variables Zeichen auf einen Teilbereich der möglichen Zeichen, nicht aber ein fixes Zeichen festgelegt ist.

11. Verfahren nach Anspruch 10,
wobei ein Schema mindestens einen der folgenden Teilbereiche der möglichen Zeichen eines variablen Zeichens aufweist: nicht druckbare Zeichen, Sonderzeichen, Ziffern, Buchstaben, Kleinbuchstaben, Großbuchstaben, insbesondere durch ASCII-Codes.

12. Verfahren nach einem der vorhergehenden Ansprüche,
wobei ein Schema für jede Position ein fixes Zeichen oder ein variables Zeichen enthält.

13. Verfahren nach einem der vorhergehenden Ansprüche,
wobei ein Schema eine Codelänge aufweist.

14. Verfahren nach einem der vorhergehenden Ansprüche,
wobei ein Schema als regulärer Ausdruck formuliert wird, der für die jeweiligen Positionen die erwarteten Zeichen angibt.

15. Optoelektronischer Codeleser (10) mit mindestens einem Lichtempfangselement (24) zur Erzeugung von Bilddaten aus Empfangslicht und mit einer Steuer- und Auswertungseinheit (26), in der ein Verfahren zum Lesen von optischen Codes (20) nach einem der vorhergehenden Ansprüche implementiert ist.

## Claims

1. A method of reading an optical code (20) that encodes a message which has a character chain having a plurality of characters, said method comprising the steps
recording image data having the optical code (20);
segmenting the image data to locate a region of interest (30) having the optical code (20);
evaluating the image data within the region of interest (30) to read the message; and
comparing the read characters of the message with at least one scheme which contains an expectation for at least one position of the message of a character at this position of the optical code (20) to be read and thereby determining a scheme which matches the message and which agrees with the read message in a minimum portion of the characters,
**characterized in that**
a size of a region of interest in which an optical code (20) matching the scheme fits is determined from the scheme; and **in that** a new region of interest (32) of this size is produced.

2. A method in accordance with claim 1,
wherein the new region of interest (32) is only produced when the optical code (20) had not previously been able to be fully read.

3. A method in accordance with claim 1 or claim 2,
wherein the new region of interest (34) is only produced when the optical code (20) in accordance with the matching scheme does not already fit in the region of interest (30) located by means of the segmentation.

4. A method in accordance with any one of the preceding claims,
wherein the size of the new region of interest (32) is determined from a module size determined from the read characters of the message and a number of characters of the message expected in accordance with the matching scheme is determined.

5. A method in accordance with any one of the preceding claims,
wherein a position of the new region of interest (32) in which it is expected that the optical code (20) is completely within the new region of interest (32) is determined with reference to the read characters of the message and the matching scheme.

6. A method in accordance with any one of the preceding claims,
wherein an orientation of the new region of interest (32) in which it is expected that the optical code (20) is completely within the new region of interest (32) is determined with reference to the read characters of the message.

7. A method in accordance with claim 6,
wherein the position and/or orientation of the new region of interest (32) is/are related to a start or stop character of the read characters of the message.

8. A method in accordance with any one of the preceding claims,
wherein, for at least one position of the message, a scheme contains a fixed character which is expected at this position in optical codes (20) to be read.

9. A method in accordance with claim 8,
wherein a scheme is considered as matching the message when it agrees with the message in a minimum portion of the fixed characters, in particular at least half of the fixed characters or all the fixed characters.

10. A method in accordance with any one of the preceding claims,
wherein, for at least one position of the message, a scheme contains a variable character which is expected at this position in codes (20) to be read, with a variable character being set to a partial range of the possible characters, but not to a fixed character.

11. A method in accordance with claim 10,
wherein a scheme has at least one of the following partial regions of the possible characters of a variable character: non-printable characters, special characters, numerals, letters, lower case letters, upper case letters, in particular by ASCII codes.

12. A method in accordance with any one of the preceding claims,
wherein a scheme contains a fixed character or a variable character for every position.

13. A method in accordance with any one of the preceding claims,
wherein a scheme has a code length.

14. A method in accordance with any one of the preceding claims,
wherein a scheme is formulated as a regular expression which indicates the expected characters for the respective positions.

15. An optoelectronic code reader (10) having at least one light reception element (24) for generating image data from received light and having a control and evaluation unit (26) in which a method of reading optical codes (20) in accordance with any one of the preceding claims is implemented.

## Revendications

1. Procédé de lecture d'un code optique (20) codant un message qui comprend une chaîne de caractères ayant une multitude de caractères, comprenant les étapes consistant à :
enregistrer des données d'image comprenant le code optique (20),
segmenter les données d'image afin de trouver une zone d'intérêt (30) comprenant le code optique (20),
évaluer les données d'image à l'intérieur de la zone d'intérêt (30) afin de lire le message,
comparer les caractères lus du message à au moins un schéma qui contient, pour au moins une position du message, une attente concernant un caractère à cette position du code optique (20) à lire, et définir ainsi un schéma correspondant au message qui coïncide avec le message lu pour une proportion minimale des caractères,
**caractérisé en ce que**
la taille d'une zone d'intérêt est définie à partir du schéma, zone dans laquelle s'inscrit un code optique (20) correspondant au schéma,
et **en ce qu'**une nouvelle zone d'intérêt (32) de cette taille est générée.

2. Procédé selon la revendication 1,
dans lequel la nouvelle zone d'intérêt (32) n'est générée que si le code optique (20) n'a pas déjà pu être lu complètement auparavant.

3. Procédé selon la revendication 1 ou 2,
dans lequel la nouvelle zone d'intérêt (34) n'est générée que si, selon le schéma correspondant, le code optique (20) ne s'inscrit pas déjà dans la zone d'intérêt (30) trouvée au moyen de la segmentation.

4. Procédé selon l'une des revendications précédentes,
dans lequel la taille de la nouvelle zone d'intérêt (32) est définie à partir d'une taille de module, déterminée à partir des caractères lus du message, et d'un nombre, attendu selon le schéma correspondant, de caractères du message.

5. Procédé selon l'une des revendications précédentes,
dans lequel, à l'aide des caractères lus du message et à l'aide du schéma correspondant, une position de la nouvelle zone d'intérêt (32) est définie, à laquelle on s'attend à ce que le code optique (20) se trouve complètement à l'intérieur de la nouvelle zone d'intérêt (32).

6. Procédé selon l'une des revendications précédentes,
dans lequel, à l'aide des caractères lus du message, une orientation de la nouvelle zone d'intérêt (32) est définie, selon laquelle on s'attend à ce que le code optique (20) se trouve complètement à l'intérieur de la nouvelle zone d'intérêt (32).

7. Procédé selon la revendication 6,
dans lequel la position et/ou l'orientation de la nouvelle zone d'intérêt (32) est rapportée à un caractère de début ou de fin des caractères lus du message.

8. Procédé selon l'une des revendications précédentes,
dans lequel, pour au moins une position du message, un schéma contient un caractère fixe qui est attendu à cette position dans les codes optiques (20) à lire.

9. Procédé selon la revendication 8,
dans lequel un schéma est considéré comme correspondant au message s'il coïncide avec le message pour une proportion minimale des caractères fixes, en particulier pour au moins la moitié des caractères fixes ou pour tous les caractères fixes.

10. Procédé selon l'une des revendications précédentes,
dans lequel, pour au moins une position du message, un schéma contient un caractère variable qui est attendu à cette position dans les codes (20) à lire, un caractère variable étant fixé à un sous-ensemble des caractères possibles, mais non pas à un caractère fixe.

11. Procédé selon la revendication 10,
dans lequel un schéma comporte au moins l'un des sous-ensembles suivants des caractères possibles pour un caractère variable : caractères non imprimables, caractères spéciaux, chiffres, lettres, lettres minuscules, lettres majuscules, en particulier par des codes ASCII.

12. Procédé selon l'une des revendications précédentes,
dans lequel un schéma contient un caractère fixe ou un caractère variable pour chaque position.

13. Procédé selon l'une des revendications précédentes,
dans lequel un schéma présente une longueur de code.

14. Procédé selon l'une des revendications précédentes,
dans lequel un schéma est formulé comme une expression régulière qui indique les caractères attendus pour les positions respectives.

15. Lecteur de code optoélectronique (10) comprenant au moins un élément de réception de lumière (24) pour générer des données d'image à partir de la lumière reçue et comprenant une unité de commande et d'évaluation (26) dans laquelle est mis en œuvre un procédé de lecture de codes optiques (20) selon l'une des revendications précédentes.
